# EUROPEAN PATENT SPECIFICATION

(11) **EP 3 817 009 B1**
(45) Date of publication and mention of the grant of the patent: **24.08.2022**
(21) Application number: 20203642.2
(22) Date of filing: 23.10.2020
(51) Int. Cl.: H01B 7/295, H01B 13/24, G02B 6/44, H01B 11/22

(54) **PHOTOELECTRIC COMPOSITE CABLE FOR AN INDOOR WIRELESS DISTRIBUTION SYSTEM AND PREPARATION METHOD THEREOF**
PHOTOELEKTRISCHES VERBUNDKABEL FÜR EIN DRAHTLOSES INNENRAUMVERTEILUNGSSYSTEM UND VERFAHREN ZU DESSEN HERSTELLUNG
CÂBLE COMPOSITE PHOTOÉLECTRIQUE POUR UN SYSTÈME DE DISTRIBUTION SANS FIL INTÉRIEUR ET SON PROCÉDÉ DE PRÉPARATION

(30) Priority: 29.10.2019 CN 201911039723
(43) Date of publication of application: 05.05.2021
(73) Proprietor: Hengtong Optic-Electric Co., Ltd, Suzhou, Jiangsu 215234 (CN)
(72) Inventor: WANG, Tingting, Suzhou, Jiangsu Province 215234 (CN); GAO, Feng, Suzhou, Jiangsu Province 215234 (CN); ZHANG, Yu, Suzhou, Jiangsu Province 215234 (CN); SHEN, Chenxi, Suzhou, Jiangsu Province 215234 (CN); ZHANG, Wenmei, Suzhou, Jiangsu Province 215234 (CN)
(74) Representative: Noréns Patentbyrå AB

(56) References cited:
- EP-A1- 0 545 622
- US-A1- 2019 295 745
- US-B1- 10 435 152
- DATABASE WPI Week 201555 Thomson Scientific, London, GB; AN 2015-422492 XP002802506, -& CN 104 616 824 A (SUZHOU WEIERTE CABLE TECHNOLOGY CO LTD) 13 May 2015 (2015-05-13)

## Description

### TECHNICAL FIELD

The present invention relates to the technical field of photoelectric composite cable structures, and more particularly, to a photoelectric composite cable for an indoor wireless distribution system and a method for preparing the photoelectric composite cable.

### BACKGROUND

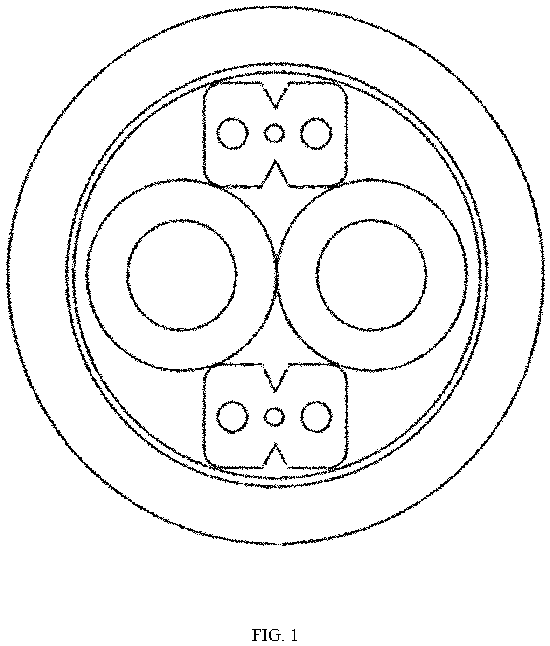

With increasing maturity of a 4G technology and development of a 5G technology, there are more and more small base stations used for wireless signal coverage in the field of wireless communication. However, since a comprehensive cost of network construction of 5G is more than five times that of 4G, 4G may not be replaced by 5G, and 5G will coexist with 4G for a long time. In the long run, a photoelectric composite cable is required to support 4G and 5G indoor small base stations at the same time, and evolution to 5G may be realized by simplest engineering construction without changing an indoor network specification based on a CAT6A network cable or optical fiber laid during 4G deployment, thus solving a problem of high cost in network construction. An existing photoelectric composite cable has a structure as shown in FIG. 1, which comprises a group of power wires and a group of butterfly cables located in an inner cavity formed by an outer sheath and a polyester belt and arranged at intervals through the power wires. A capacity of the photoelectric composite cable is relatively low, which cannot meet requirements of 5G, and a diameter of the photoelectric composite cable set according to the structure meeting the requirements of 5G is excessively large. Another photoelectic composite cable is disclosed in US 2019/295745 A1 which describes a High Definition Multimedia Interface (HDMI) photoelectric composite cable, comprising: a sheath; an optical fiber unit comprising one or more optical fibers and an optical fiber sheath uniformly extruded on a periphery of the one or more optical fibers; wherein the fillers are aramid yarns, PP ripcords, cotton yarns or nylon yarns.wherein the shielding layer is a polyester tape, an aluminum foil, a copper foil polyethylene terephthalate tape, cotton paper or a polytetrafluoroethylene tape. The sheath is made from low-smoke halogen-free flame-retardant polyolefin. Therefore, a small-diameter photoelectric composite cable capable of meeting current requirements is urgently needed.

### SUMMARY

Directed to the above problems, the present invention provides a photoelectric composite cable for an indoor wireless distribution system, which is low in cost, small in outer diameter, large in capacity and light in weight, meets the communication requirements both of 4G and 5G, and has multiple applications.

A photoelectric composite cable for an indoor wireless distribution system, comprising two power wires, four groups of wire pairs, an optical unit, and a framework, which are arranged in a cable cavity of the cable, wherein, the framework is provided with seven radial side bulges separating the cable cavity into seven framework cavities, in which the two power wires, the four groups of wire pairs and the optical unit are arranged respectively to form an integral structure, the integral structure on a periphery thereof is coated with a polyester belt, and the polyester belt on a periphery thereof is coated with an outer sheath, and wherein, the optical unit comprises a flame-retardant sheath and an aramid fiber reinforcing ring piece respectively with a circular ring shaped cross section and sequentially arranged from outside to inside, and an optical fiber arranged in an inner cavity of the aramid fiber reinforcing ring piece.

Further, the four groups of wire pairs are arranged in four adjacent framework cavities on one side of the framework cavity, and the two power wires are arranged in two adjacent framework cavities on the other side of the framework cavity where the optical unit is arranged.

Further, the optical fiber in the optical unit has a tight-buffered structure or a bare fiber structure.

Further, after the polyester belt is wrapped, a layer of the outer sheath is extruded on the periphery of the polyester belt, and the outer sheath is made of an environment-friendly polyvinyl chloride or low-smoke zero-halogen material.

Further, after the polyester belt is wrapped, an aluminum foil shielding layer is coated on the polyester belt, and the outer sheath is coated on a periphery of the aluminum foil shielding layer.

Further, each of the power wires is made of a large-diameter conductor or a plurality of small-diameter conductors stranded, and an insulating protective layer coated on the large-diameter conductor or the plurality of small-diameter conductors stranded, and after stranded, the two power wires can be quickly connected to a RJ45 connector.

A method for preparing a photoelectric composite cable, comprising:
manufacturing power wires, wire pairs and an optical unit, separately and independently;
arranging two power wires which are sheathed, four wire pairs which are stranded, and an optical unit which is sheathed, in corresponding framework cavities of a framework to form an integral structure;
wrapping a polyester belt on a periphery of the integral structure; and
extruding a layer of an outer sheath on a periphery of the polyester belt.

The method further comprising an aluminum foil shielding process between wrapping the polyester belt and extruding the outer sheath, to ensure overall shielding and anti-interference abilities of the composite cable.

Further, the step of manufacturing power wires comprises: preparing a copper wire with a corresponding size, and coating an insulating protective layer on a periphery of the copper wire; and the step of manufacturing wire pairs comprises: preparing a copper wire with a corresponding size, coating an insulating sheath on a periphery of the copper wire, and stranding the copper wires to forming a wire pair, and coating a sheath on the wire pair.

Further, the step of manufacturing an optical unit comprises: preparing an optical fiber with a tight-buffered structure or a bare fiber structure, and coating an aramid fiber reinforcing ring piece and a flame-retardant sheath on the optical fiber sequentially.

After the present invention is used, since the seven radial side bulges of the framework divide the cable cavity into the seven framework cavities, the two power wires, the four groups of wire pairs and the optical unit are respectively arranged in the corresponding framework cavities to form the integral structure, the periphery of the integral structure is coated with the polyester belt, the periphery of the polyester belt is coated with the outer sheath, the optical unit comprises the flame-retardant sheath and the aramid fiber reinforcing ring piece which have the cross section in the circular ring shape respectively and are sequentially arranged from outside to inside, and the optical fiber is arranged in the inner cavity of the aramid fiber reinforcing ring piece. The optical unit has advantages of an increased capacity, a long transmission distance, a strong anti-interference ability, small attenuation, and the like, and a reliability of the optical cable is improved by using the aramid fiber reinforcing ring piece as a reinforcing piece, so that optical interconnection between the small base stations in network construction is realized, a huge data flow is provided, and a manufacturing process is simple without needing to add filling materials while ensuring a transmission performance, thus reducing an outer diameter and an occupied space, raw material consumption, a product cost, as well as a manufacturing cost and a construction cost. The photoelectric composite cable is low in cost, small in outer diameter, large in capacity and light in weight, meets the communication requirements of 4G and 5G at the same time, and has multiple purposes.

### BRIEF DESCRIPTION OF DRAWINGS

Fig. 1 is a cross-sectional view of a photoelectric composite cable of the existing art; and
Fig. 2 is a cross-sectional view of a photoelectric composite cable according to the present invention, wherein:
   1 refers to power wire, 2 refers to wire pair, 3 refers to optical unit, 4 refers to framework, 41 refers to radial side bulge, 5 refers to framework cavity, 6 refers to polyester belt, 7 refers to outer sheath, 8 refers to flame-retardant sheath, 9 refers to aramid reinforcing ring piece, 10 refers to optical fiber, and 11 refers to aluminum foil shielding layer.

### DETAILED DESCRIPTION

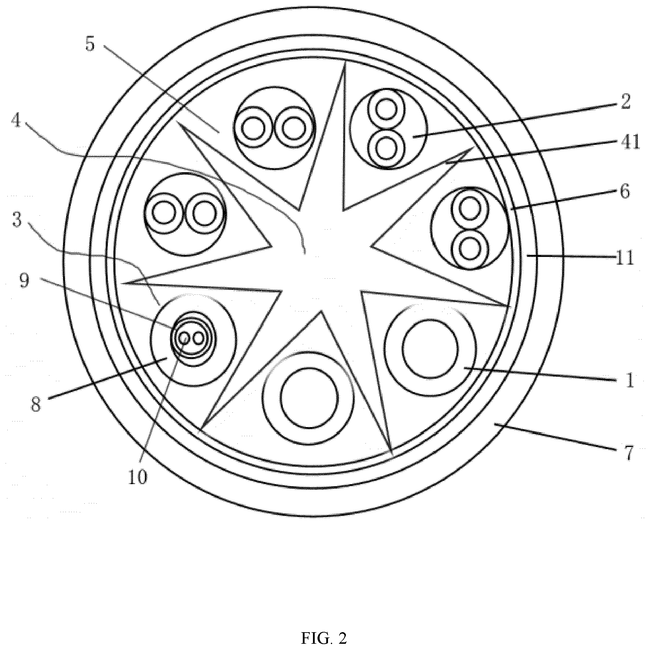

As shown in FIG. 2, a photoelectric composite cable for an indoor wireless distribution system comprises two power wires 1, four groups of wire pairs 2, an optical unit 3, and a framework 4. The framework 4 is provided with seven radial side bulges 41 separating a cable cavity into seven framework cavities 5, and the two power wires 1, the four groups of wire pairs 2 and the optical unit 3 are respectively arranged in the corresponding framework cavities 5 to form an integral structure. The integral structure is coated on a periphery thereof with a polyester belt 6, and the polyester belt 6 is coated on a periphery thereof with an outer sheath 7. The optical unit 3 comprises a flame-retardant sheath 8 and an aramid fiber reinforcing ring piece 9 with a circular-ring-shaped cross section respectively, and sequentially arranged from outside to inside. An optical fiber 10 is arranged in an inner cavity of the aramid fiber reinforcing ring piece 9.

The number of cores of the optical fiber 10 can vary according to requirements, and the optical fiber may have higher density.

The four groups of wire pairs 2 are adjacently arranged in four adjacent framework cavities 5 on one side of the framework cavity in which the fiber unit 3 is arranged, and the two power wires 1 are arranged in two adjacent framework cavities 5 on the other side of the framework cavity in which the fiber unit 3 is arranged.

A tight-buffered structure or a bare fiber structure is adopted for the optical fiber 10 in the optical unit 3, the flame-retardant sheath 8 enables the optical unit to have a flame-retardant performance which meets OFNR level requirements, and meanwhile, the aramid fiber reinforcing ring piece 9 in the optical unit 3 improves the tensile strength of the cable.

After the polyester belt 6 is formed by wrapping, a layer of outer sheath 7, which is made of an environment-friendly polyvinyl chloride or low-smoke zero-halogen material, is extruded on the periphery of the polyester belt. The sheath which is formed by one step molding has the flame-retardant performance of an IEC 60332-3C bunched cable combustion grade.

In an embodiment, the wrapped polyester belt 6 is coated with an aluminum foil shielding layer 11, and the outer sheath 7 is coated on a periphery of the aluminum foil shielding layer 11.

Each of the power wires 1 is consisted of a large-diameter conductor, or a plurality of small-diameter conductors which are stranded, and an insulating protective layer coated on the conductor. The two power wires 1 are stranded and can be quickly connected to a RJ45 connector.

According to the invention, a method for preparing a photoelectric composite cable comprises: preparing the power wires, the wire pairs and the optical unit, separately and independently; arranging the two power wires which are completely sleeved, the four wire pairs which are stranded and the optical unit which is completely sleeved in corresponding framework cavities of the framework to form an integral structure; wrapping the polyester belt on the periphery of the integral structure; and extruding a layer of the outer sheath on the periphery of the polyester belt.

The method for preparing a photoelectric composite cable further comprises an aluminum foil shielding process between wrapping the polyester belt and extruding the outer sheath, to ensure overall shielding and anti-interference abilities of the composite cable.

The step of manufacturing the power wires comprises: preparing a copper wire with a corresponding size, and coating an insulating protective layer on a periphery of the copper wire.

The step of manufacturing the wire pairs comprises: preparing a copper wire with a corresponding size, coating an insulating sheath on a periphery of the copper wire, and stranding the copper wires to forming a wire pair, and coating a sheath on the wire pair.

The step of manufacturing the optical unit comprises: preparing an optical fiber with a tight-buffered structure or a bare fiber structure, and coating an aramid fiber reinforcing ring piece and a flame-retardant sheath on the optical fiber sequentially.

Since the seven radial side bulges of the framework separate the cable cavity into the seven framework cavities, and the two power wires, the four groups of wire pairs and the optical unit can be respectively arranged in the corresponding framework cavities to form an integral structure. The integral structure is coated on the periphery thereof with the polyester belt, and the polyester belt is coated on the periphery thereof with the outer sheath. The optical unit comprises the flame-retardant sheath and the aramid fiber reinforcing ring piece which have the cross section in the circular ring shape respectively and are sequentially arranged from outside to inside, and the optical fiber is arranged in the inner cavity of the aramid fiber reinforcing ring piece. The optical unit has advantages of increased capacity, long transmission distance, strong anti-interference ability, small attenuation, and the like, and the optical cable can have improved reliability by using the aramid fiber reinforcing ring piece as a reinforcing piece. The reliable optical interconnection between the small base stations in network infrastructure is realized, a huge data flow is provided. The manufacturing process is simple without needs of adding filling materials while ensuring a transmission performance, thus reducing an outer diameter and an occupied space, raw material consumption, a product cost, as well as a manufacturing cost and a construction cost. The photoelectric composite cable is low in cost, small in outer diameter, large in capacity and light in weight, meets the communication requirements of 4G and 5G at the same time, and has multiple purposes.

With successful freezing of a 3GPP R15 version (Phase1) at the end of 2017, a pace of 5G has gradually approached. In a 5G era, 70% of businesses will take place indoors. 100Mbps will become a general requirement of 5G indoor coverage at anytime and anywhere, and a capacity density of indoor scenes will be increased by eight times in the next five years. A new photoelectric hybrid cable will be widely used during evolution from 4G to 5G, and will be used in conjunction with the small base stations to connect pRRU and DCU, thus solving problems of optical fiber communication, power transmission, data transmission and the like at the same time. Due to a built-in optical cable unit, the power wire and a data cable under the outer sheath, transmission of a wide-frequency signal and power transmission are realized, thus having safe and reliable transmission, greatly improving an anti-interference ability, and realizing multiple purposes. Meanwhile, a unit cable with a greatly reduced outer diameter may be used selectively, and the multi-purpose unit cable is installed in a wiring project once, which not only saves wiring time and space, but also further reduces an installation cost.

It is apparent for those skilled in the art that the present invention is not limited to the details of the above exemplary embodiments, and the present invention can be realized in other specific forms without departing from the present invention. Therefore, the embodiments should be regarded as being exemplary and the scope of the present invention is defined by the appended claims.

## Claims

1. A photoelectric composite cable for an indoor wireless distribution system, comprising two power wires, four groups of wire pairs, an optical unit, and a framework, which are arranged in a cable cavity of the cable, wherein, the framework is provided with seven radial side bulges separating the cable cavity into seven framework cavities, in which the two power wires, the four groups of wire pairs and the optical unit are arranged respectively to form an integral structure, the integral structure on a periphery thereof is coated with a polyester belt, and the polyester belt on a periphery thereof is coated with an outer sheath, and wherein, the optical unit comprises a flame-retardant sheath and an aramid fiber reinforcing ring piece respectively with a circular ring shaped cross section and sequentially arranged from outside to inside, and an optical fiber arranged in an inner cavity of the aramid fiber reinforcing ring piece.

2. The photoelectric composite cable of claim 1, wherein the four groups of wire pairs are arranged in four adjacent framework cavities on one side of the framework cavity, and the two power wires are arranged in two adjacent framework cavities on the other side of the framework cavity where the optical unit is arranged.

3. The photoelectric composite cable of claim 2, wherein the optical fiber in the optical unit has a tight-buffered structure or a bare fiber structure.

4. The photoelectric composite cable of claim 1, wherein, after the polyester belt is wrapped, a layer of the outer sheath is extruded on the periphery of the polyester belt, and the outer sheath is made of an environment-friendly polyvinyl chloride or low-smoke zero-halogen material.

5. The photoelectric composite cable of claim 1, wherein, after the polyester belt is wrapped, an aluminum foil shielding layer is coated on the polyester belt, and the outer sheath is coated on a periphery of the aluminum foil shielding layer.

6. The photoelectric composite cable of claim 1, wherein each of the power wires is made of a large-diameter conductor or a plurality of small-diameter conductors stranded, and an insulating protective layer coated on the large-diameter conductor or the plurality of small-diameter conductors stranded, and after stranded, the two power wires can be quickly connected to a RJ45 connector.

7. A method for preparing a photoelectric composite cable, comprising:
manufacturing power wires, wire pairs and an optical unit, separately and independently;
arranging two power wires which are sheathed, four wire pairs which are stranded, and an optical unit which is sheathed, in corresponding framework cavities of a framework to form an integral structure;
wrapping a polyester belt on a periphery of the integral structure; and
extruding a layer of an outer sheath on a periphery of the polyester belt.

8. The method of claim 7, further comprising an aluminum foil shielding process between wrapping the polyester belt and extruding the outer sheath, to ensure overall shielding and anti-interference abilities of the composite cable.

9. The method of claim 7, wherein, the step of manufacturing power wires comprises: preparing a copper wire with a corresponding size, and coating an insulating protective layer on a periphery of the copper wire; and the step of manufacturing wire pairs comprises: preparing a copper wire with a corresponding size, coating an insulating sheath on a periphery of the copper wire, and stranding the copper wires to forming a wire pair, and coating a sheath on the wire pair.

10. The method of claim 7, wherein, the step of manufacturing an optical unit comprises: preparing an optical fiber with a tight-buffered structure or a bare fiber structure, and coating an aramid fiber reinforcing ring piece and a flame-retardant sheath on the optical fiber sequentially.

## Patentansprüche

1. Photoelektrisches Verbundkabel für ein drahtloses Verteilersystem in Innenräumen, das zwei Stromkabel, vier Gruppen von Drahtpaaren, eine optische Einheit und einen Rahmen umfasst, die in einem Kabelhohlraum des Kabels angeordnet sind, wobei der Rahmen mit sieben radialen Seitenwülsten versehen ist, die den Kabelhohlraum in sieben Rahmenhohlräume teilen, in denen die zwei Stromkabel, die vier Gruppen von Drahtpaaren und die optische Einheit jeweils angeordnet sind, um eine integrale Struktur zu bilden, wobei die integrale Struktur an ihrem Umfang mit einem Polyesterband beschichtet ist, die an ihrem Umfang mit einem Außenmantel beschichtet ist, und wobei die optische Einheit eine flammhemmende Umhüllung bzw. ein Aramidfaser-Verstärkungsringstück mit einem kreisringförmigen Querschnitt, das sequentiell von außen nach innen angeordnet ist, und eine in einem inneren Hohlraum des Aramidfaser-Verstärkungsringstücks angeordnete optische Faser umfasst.

2. Das photoelektrische Verbundkabel nach Anspruch 1, wobei
die vier Gruppen von Drahtpaaren in vier benachbarten Rahmenhohlräumen auf einer Seite des Rahmenhohlraums angeordnet sind, und die zwei Stromkabel in zwei benachbarten Rahmenhohlräumen auf der anderen Seite des Rahmenhohlraums angeordnet sind, wo die optische Einheit angeordnet ist.

3. Das photoelektrische Verbundkabel nach Anspruch 2, wobei
die optische Faser in der optischen Einheit eine Kompaktader-Struktur oder eine freiliegende Faserstruktur aufweist.

4. Das photoelektrische Verbundkabel nach Anspruch 1, wobei,
nach dem Umwickeln des Polyesterbandes eine Schicht des Außenmantels auf den Umfang des Polyesterbandes extrudiert wird, wobei der Außenmantel aus einem umweltfreundlichen Polyvinylchlorid oder einem raucharmen halogenfreien Material besteht.

5. Das photoelektrische Verbundkabel nach Anspruch 1, wobei,
nach dem Umwickeln des Polyesterbandes eine Abschirmschicht aus Aluminiumfolie auf das Polyesterband aufgetragen wird, und der Außenmantel auf einem Umfang der Abschirmschicht aus Aluminiumfolie aufgetragen wird.

6. Das photoelektrische Verbundkabel nach Anspruch 1, wobei
jedes der Stromkabel aus einem Leiter mit großem Durchmesser oder einer Vielzahl von verseilten Leitern mit kleinem Durchmesser besteht und eine isolierende Schutzschicht auf dem Leiter mit großem Durchmesser oder der Vielzahl von verseilten Leitern mit kleinem Durchmesser aufgebracht ist, und die beiden Stromkabel nach dem Verseilen leicht an einen RJ45-Stecker angeschlossen werden können.

7. Verfahren zur Herstellung eines photoelektrischen Verbundkabels, umfassend:
Separate und unabhängige Herstellung von Stromkabeln, Drahtpaaren und einer optischen Einheit;
Anordnung von zwei ummantelten Stromkabeln, vier verseilten Drahtpaaren und einer ummantelten optischen Einheit in entsprechenden Rahmenhohlräumen eines Rahmens zur Bildung einer integralen Struktur;
Wickeln eines Polyesterbandes um den Umfang der integralen Struktur; und
Extrudieren einer Schicht eines Außenmantels auf dem Umfang des Polyesterbandes.

8. Verfahren nach Anspruch 7, das ferner ein Verfahren zur Abschirmung mit Aluminiumfolie zwischen dem Umwickeln des Polyesterbandes und dem Extrudieren des Außenmantels umfasst, um die Gesamtabschirmung und die Anti-Interferenzeigenschaften des Verbundkabels sicherzustellen.

9. Das Verfahren nach Anspruch 7, wobei,
der Schritt der Herstellung von Stromkabeln umfasst:
Herstellen eines Kupferdrahtes mit einer entsprechenden Größe und Aufbringen einer isolierenden Schutzschicht auf einen Umfang des Kupferdrahtes; und der Schritt des Herstellens von Drahtpaaren umfasst:
Herstellen eines Kupferdrahtes mit einer entsprechenden Größe, Beschichten eines isolierenden Mantels auf einem Umfang des Kupferdrahtes und Verseilen der Kupferdrähte, um ein Drahtpaar zu bilden, und Beschichten eines Mantels auf dem Drahtpaar.

10. Das Verfahren nach Anspruch 7, wobei,
der Schritt der Herstellung einer optischen Einheit umfasst:
Herstellen einer optischen Faser mit einer Kompaktader-Struktur oder einer freiliegende Faserstruktur und aufeinanderfolgendes Beschichten der optischen Faser mit einem Aramidfaser-Verstärkungsringstück und einem flammhemmenden Mantel.

## Revendications

1. Câble composite photoélectrique pour un système de distribution sans fil d'intérieur, comprenant deux fils d'alimentation, quatre groupes de paires de fils, une unité optique et une armature, qui sont agencés dans une cavité de câble du câble, dans lequel l'armature est pourvue de sept renflements latéraux radiaux séparant la cavité de câble en sept cavités d'armature dans lesquelles les deux fils d'alimentation, les quatre groupes de paires de fils et l'unité optique sont agencés respectivement pour former une structure monobloc, la structure monobloc est revêtue sur une de ses périphéries d'une ceinture en polyester, et la ceinture en polyester est revêtue sur une de ses périphéries d'une gaine extérieure, et dans lequel l'unité optique comprend une gaine ignifuge et une pièce annulaire de renforcement en fibre d'aramide, respectivement avec une section transversale en forme d'anneau circulaire et agencée séquentiellement de l'extérieur vers l'intérieur, et une fibre optique agencée dans une cavité intérieure de la pièce annulaire de renforcement en fibre d'aramide.

2. Câble composite photoélectrique de la revendication 1, dans lequel les quatre groupes de paires de fils sont agencés dans quatre cavités d'armature adjacentes sur un côté de la cavité d'armature, et les deux fils d'alimentation sont agencés dans deux cavités d'armature adjacentes sur l'autre côté de la cavité d'armature où l'unité optique est agencée.

3. Câble composite photoélectrique de la revendication 2, dans lequel la fibre optique dans l'unité optique a une structure serrée ou une structure de fibre nue.

4. Câble composite photoélectrique de la revendication 1, dans lequel, après l'enroulement de la ceinture en polyester, une couche de la gaine est extrudée sur la périphérie de la ceinture en polyester, et la gaine extérieure est réalisée en un chlorure de polyvinyle respectueux de l'environnement ou un matériau sans halogène à faible émission de fumée.

5. Câble composite photoélectrique de la revendication 1, dans lequel, après l'enroulement de la ceinture en polyester, une couche de blindage en feuille d'aluminium est appliquée sur la ceinture en polyester, et la gaine extérieure est appliquée sur une périphérie de la couche de blindage en feuille d'aluminium.

6. Câble composite photoélectrique de la revendication 1, dans lequel chacun des fils d'alimentation est réalisé en un conducteur de grand diamètre ou une pluralité de conducteurs de petit diamètre toronnés, et une couche protectrice isolante est appliquée sur le conducteur de grand diamètre ou la pluralité de conducteurs de petit diamètre toronnés, et après avoir été toronnés, les deux fils d'alimentation peuvent être rapidement connectés à un connecteur RJ45.

7. Procédé de préparation d'un câble composite photoélectrique, comprenant :
la fabrication de fils d'alimentation, de paires de fils et d'une unité optique, séparément et indépendamment ;
l'agencement de deux fils d'alimentation qui sont gainés, de quatre paires de fils qui sont toronnés et d'une unité optique qui est gainée, dans des cavités d'armature correspondantes d'une armature pour former une structure monobloc ;
l'enroulement d'une ceinture en polyester sur une périphérie de la structure monobloc ; et
l'extrusion d'une couche d'une gaine extérieure sur une périphérie de la ceinture en polyester.

8. Procédé de la revendication 7, comprenant en outre un processus de blindage par feuille d'aluminium entre l'enroulement de la ceinture en polyester et l'extrusion de la gaine extérieure, pour assurer les capacités globales de blindage et d'anti-interférence du câble composite.

9. Procédé de la revendication 7, dans lequel, l'étape de fabrication de fils d'alimentation comprend : la préparation d'un fil de cuivre de taille correspondante, et le revêtement d'une couche protectrice isolante sur une périphérie du fil de cuivre ; et l'étape de fabrication de paires de fils comprend : la préparation d'un fil de cuivre de taille correspondante, le revêtement d'une gaine isolante sur une périphérie du fil de cuivre, et le toronnage des fils de cuivre pour former une paire de fils, et le revêtement d'une gaine sur la paire de fils.

10. Procédé de la revendication 7, dans lequel, l'étape de fabrication d'une unité optique comprend : la préparation d'une fibre optique avec une structure serrée ou une structure de fibre nue, et le revêtement d'une pièce annulaire de renforcement en fibre d'aramide et d'une gaine ignifuge sur la fibre optique de manière séquentielle.
